# EUROPEAN PATENT APPLICATION

(11) **EP 4 734 091 A1**
(43) Date of publication of application: **29.04.2026**
(21) Application number: 23942439.3
(22) Date of filing: 23.06.2023
(51) Int. Cl.: G08G 1/00

(54) **MAP DISTRIBUTION DEVICE**

(71) Applicant: Astemo, Ltd., Chiyoda-ku, Tokyo 1000004 (JP)
(72) Inventor: DAITOKU Ryuji, Hitachinaka-shi, Ibaraki 312-8503 (JP); MITOME Ryota, Hitachinaka-shi, Ibaraki 312-8503 (JP)
(74) Representative: MERH-IP Matias Erny Reichl Hoffmann Patentanwälte PartG mbB
(86) International application number: PCT/JP2023/023336
(87) International publication number: WO 2024/262008

(57) **Abstract**

Provided is a map distribution device that can prevent delay or omission of distribution of surroundings map information in distribution of map information on the surroundings of a host vehicle to an autonomous driving control device. The map providing device measures a map data amount of map information based on a planned traveling route in advance while the vehicle travels in a section where a load is low, and when finding a section where delay or omission of distribution of map data could occur, starts distribution of the map data to the autonomous driving control device at timing earlier than usual timing, according to the map data amount. When a load factor offers an extra margin, a map data amount or the like in a case where the vehicle departs from the planned traveling route at a branch point is measured as well.

## Description

### Technical Field

The present invention relates to a map distribution device that in an autonomous driving system, provides (distributes) high-precision map information.

### Background Art

Currently, technologies for autonomously driving a vehicle are vigorously developed, which technologies include a method featuring AI that processes information from cameras and sensors and a method using a highly precise vehicle position acquisition technique and high-precision map data. In the case of using high-precision map data, determining the current position of a vehicle is important. In general, the current position of the vehicle can be determined by, for example, specifying the current coordinates of the vehicle, using a global navigation satellite system (GNSS), and acquiring the direction of the vehicle, using sensors.

According to a navigation technique using the GNSS, map information is stored in a storage unit, such as a database, and when a user inputs a destination, a guide route leading to the inputted destination is searched for, based on the map information stored in the storage unit.

Usually, a high-precision map information providing device makes conversion into a high-precision route, based on acquired map route information, and outputs high-precision map information corresponding to the high-precision route, to an autonomous driving control device. This high-precision map information is used by the autonomous driving control device for executing processes, such as generating a traveling plan, carrying out control during traveling, and providing surroundings information during traveling. Thus, the high-precision map information providing device provides the autonomous driving control device, when necessary, with a route to travel from a traveling point onward and with surroundings map information within a specification range at a point where the vehicle is currently traveling, in a constant cycle.

For example, PTL 1 states a problem: "If route information acquired for generation of a traveling plan and information along a route acquired for execution of control during traveling are acquired over similar ranges, an excessive data amount results, which gives the autonomous driving control device a greater processing load.", and discloses a technique: "It has been found out that although route information acquired over a relatively wide range is needed for generating the traveling plan, a portion of information along the route that is needed for autonomous traveling is enough as the information along the route and surroundings information during traveling that is acquired over a narrower range does not affect autonomous driving control. For this reason, route information over a range of a first distance from the current position of the vehicle and map information over a range of a second distance shorter than the first distance from the current position of the vehicle are generated and output". Specifically, by using this technique, the high-precision map information providing device provides the autonomous driving control device with a planned traveling route of about several kilometers and with a map covering a surrounding area of the current location of about several hundred meters in a real time manner.

### Citation List

### Patent Literature

PTL 1: JP 2019-184499 A

### Summary of Invention

### Technical Problem

However, according to the above-described conventional technique, when the host vehicle passes a place involving a large amount of map data, such as a large-scale interchange or junction, a data processing amount locally increases, which puts the high-precision map providing device in a highly loaded state. It is assumed in this case that delay or omission of distribution of map information on the surroundings of the current location, which map information should have been distributed to the autonomous driving control device in the first place, based on the current position of the host vehicle, occurs.

The present invention has been conceived in view of the above circumstances, and an object of the present invention is to provide a map distribution device that can prevent delay or omission of distribution of surroundings map information in distribution of map information on the surroundings of a host vehicle to an autonomous driving control device.

### Solution to Problem

A map distribution device of the present invention that solves the above problems includes: a position acquisition unit that acquires the current position of a vehicle; a map information acquisition unit that acquires map information on a planned traveling route of the vehicle; and a map information distribution unit that distributes the map information to a different device at timing corresponding to a map data amount of the map information. The map information acquisition unit calculates the map data amount in the planned traveling route while the vehicle is traveling in a low-load section where a processing load is lower than processing loads in other sections.

### Advantageous Effects of Invention

According to the present invention, in distribution of map information on the surroundings of the host vehicle from the map distribution device to the autonomous driving control device, delay or omission of distribution of surroundings map information can be prevented even when the vehicle travels in a section where a map data amount of the map information is large and delay or omission of distribution of the surroundings map information occurs in a normal distribution cycle.

Problems, configurations, and effects other than those described above will be made clear by the following description of embodiments.

### Brief Description of Drawings

[FIG. 1] FIG. 1 is a configuration diagram of an autonomous driving system according to an embodiment.
[FIG. 2] FIG. 2 is a schematic diagram of a case where delay or omission of distribution of map information occurs.
[FIG. 3] FIG. 3 is a schematic diagram of a communication data amount of a high-precision map providing device.
[FIG. 4] FIG. 4 is a schematic diagram showing a shift in the communication data amount (first stage) of the high-precision map providing device in a case where a map data distribution method according to the embodiment is executed.
[FIG. 5] FIG. 5 is a schematic diagram showing a shift in the communication data amount (second stage) of the high-precision map providing device in a case where the map data distribution method according to the embodiment is executed.
[FIG. 6] FIG. 6 is a schematic diagram of a communication data amount of the high-precision map providing device after an improvement in map data distribution.
[FIG. 7] FIG. 7 is a flowchart of processes of map data amount measurement and map information distribution according to the embodiment.

### Description of Embodiments

Hereinafter, an embodiment of the present invention will be described with reference to the accompanying drawings. In this embodiment, a configuration in a case where a high-precision map providing device, which is a map distribution device of the present invention, is incorporated in an autonomous driving vehicle will be described.

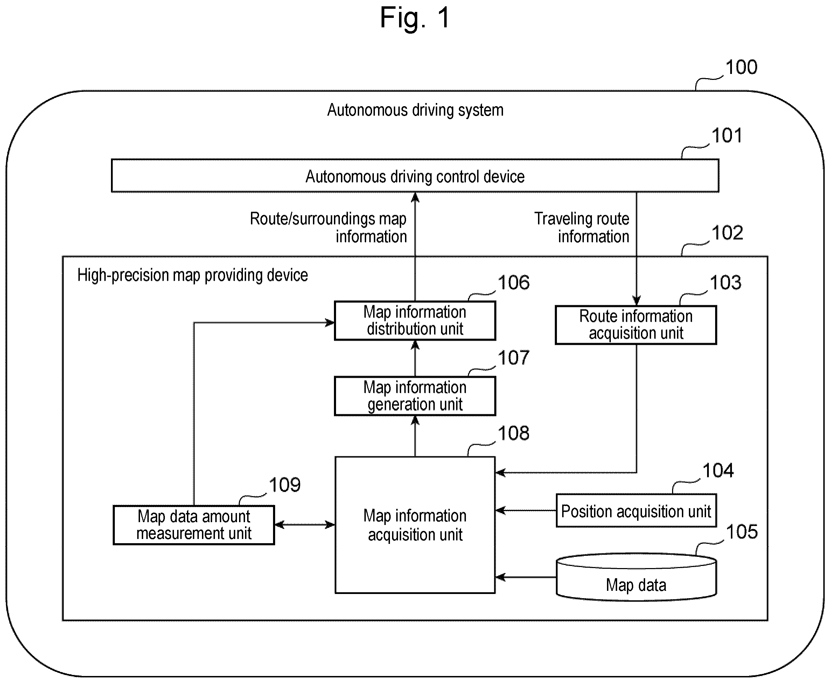

FIG. 1 shows a configuration of an autonomous driving system 100 according to this embodiment.

The autonomous driving system 100 includes an autonomous driving control device 101 and a high-precision map providing device 102.

The autonomous driving control device 101 is a device that provides the high-precision map providing device 102 with traveling route information for guiding to a target position set by operating a navigation system or the like, thereby acquiring information needed for autonomous driving from map information generated by the high-precision map providing device 102 and performing autonomous driving.

The high-precision map providing device 102 includes a route information acquisition unit 103, a position acquisition unit 104, map data 105, a map information acquisition unit 108, a map information generation unit 107, a map data amount measurement unit 109, and a map information distribution unit 106.

The route information acquisition unit 103 is a unit that acquires route information (traveling route information) for guiding to a target position set by operating a navigation system operation or the like.

The position acquisition unit 104 is a unit that acquires the current location (position information) of the host vehicle by calculating, for example, an absolute position on the terrestrial coordinate system, based on a radio wave from a positioning satellite, such as a GNSS, and an autonomous navigation position from measurements by an acceleration sensor, a gyro sensor, or the like that detects an acceleration, angular velocity, or the like acting on the vehicle.

The map data 105 stores map information including information on roads through which the host vehicle can travel.

The map information acquisition unit 108 is a unit that extracts map information (map information on the surroundings of the host vehicle in a case where the host vehicle travels on a planned traveling route) from the map data 105, the map information being needed as map information to be distributed to the autonomous driving control device 101, based on route information and position information.

The map data amount measurement unit 109 is a unit that when the host vehicle travels on a planned traveling route, measures in advance a map data amount of map information on the surroundings of the host vehicle, which map information needs to be distributed to the autonomous driving control device 101. The map data amount measurement unit 109 outputs the measured map data amount in the planned traveling route of the host vehicle, to the map information acquisition unit 108 and to the map information distribution unit 106. The map information acquisition unit 108 acquires (calculates) the map data amount in the planned traveling route of the host vehicle, the map data amount being measured by the map data amount measurement unit 109.

The map information generation unit 107 is a unit that from map information acquired by the map information acquisition unit 108, generates data to distribute it to the autonomous driving control device 101 at proper timing.

The map information distribution unit 106 is a unit that cyclically distributes map information generated by the map information generation unit 107 to the autonomous driving control device 101 at proper timing.

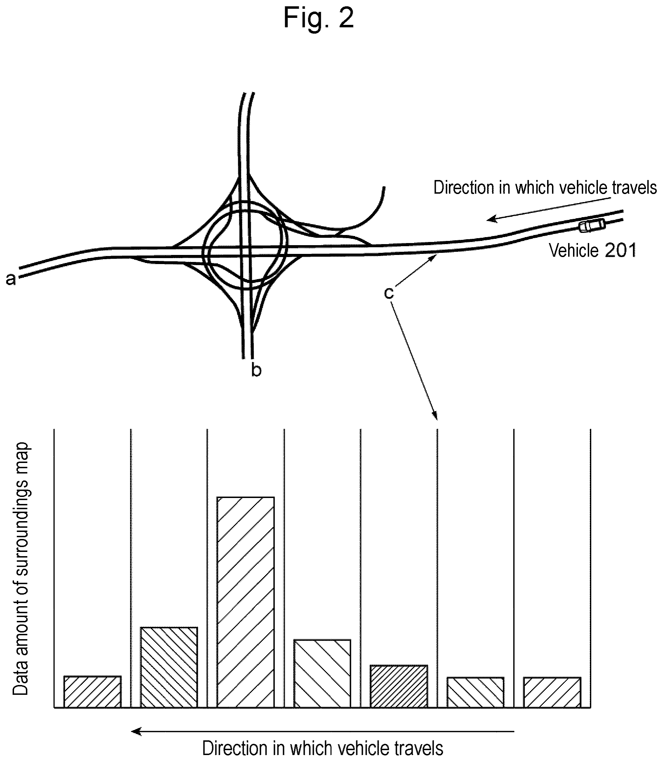

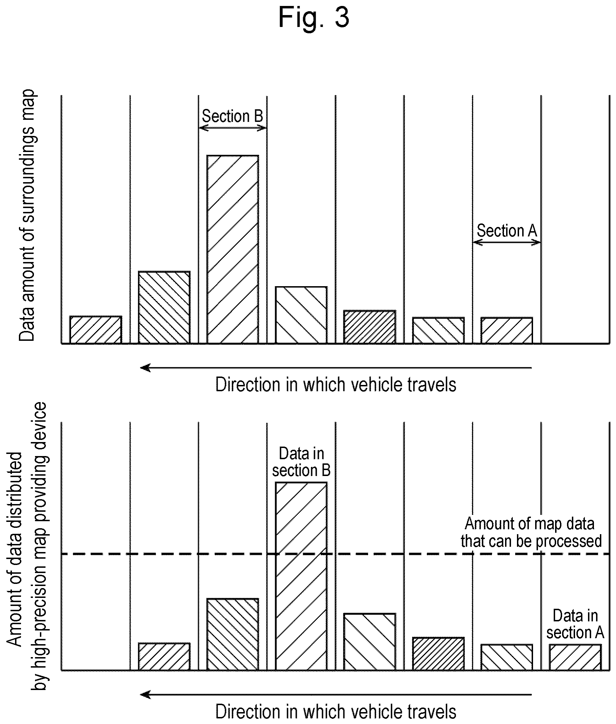

Now, an operation in a case where delay or omission of distribution of map information on the surroundings of the host vehicle from the high-precision map providing device 102 to the autonomous driving control device 101 occurs will be described with reference to FIGS. 2 and 3.

In FIG. 2, an upper half part shows an example of map information on a traveling plan, and a graph on a lower half part shows a map data amount per unit section representing an amount of map data that the high-precision map providing device 102 must distribute per unit section when the vehicle travels along the route indicated as the traveling plan. In this example, a map data amount gets larger in a section around a junction present in the map information.

In FIG. 3, a graph in an upper half part shows the map data amount per unit section shown in FIG. 2. Because the autonomous driving control device 101 uses map information on the surroundings of the host vehicle in real time to perform autonomous driving, for example, it needs to acquire map information in a section A before the vehicle enters the section A. It is assumed, for convenience in description, that map information on the next section is distributed from the high-precision map providing device 102 to the autonomous driving control device 101 as the vehicle is traveling at the current point. In this case, a graph in a lower half part of FIG. 3 shows an amount of map data that needs to be distributed from the high-precision map providing device 102.

It is also assumed that a dotted line in FIG. 3 represents the upper limit of an amount of map data that the high-precision map providing device 102 can process in a unit section. In this case, the maximum value of a map data amount of map information in a section B exceeds the upper limit, and consequently delay or omission of distribution of map information on the surroundings of the host vehicle occurs in the section B.

Hereinafter, processes executed in this embodiment will be described.

FIGS. 2 and 3 are schematic diagrams showing an outline of processes executed in this embodiment.

In FIG. 2, a vehicle 201 is traveling on a road with a point a along the planned traveling route designated as a goal. At this time, the high-precision map providing device 102 incorporated in the vehicle 201 distributes a planned traveling route ahead of the host vehicle and map information on the surroundings of the host vehicle, to the autonomous driving control device 101, as the traveling route and map information covering a route length (about several kilometers) and a range (about several hundred meters) conforming to product specifications.

For example, when the vehicle, which is traveling on the route of FIG. 2, is traveling in a section (low-load section) in which a load factor of the high-precision map providing device 102 is lower than a load factor of the same in other sections, a map data amount of "map information on the surroundings of the host vehicle", of which distribution is expected to be needed when the vehicle travels on the planned traveling route, is measured. Here, "load factor is low" refers to a state of processing performance with extra margin, such as a low CPU usage rate or traveling on a road with fewer lanes.

When this measurement leads to finding of a section in which the maximum value of a map data amount exceeds the upper limit of an amount of map data that can be processed in a unit section, as shown in the graph of FIG. 3, delay or omission of distribution of map information on the surroundings of the host vehicle is expected to occur. For this reason, distribution of surroundings map data on the surroundings of the host vehicle is started at timing earlier than usual timing. In this process, by making calculation backward from a starting point of a section (a section including a point b) in which a map data amount exceeds a processing amount of the high-precision map providing device 102 and from a portion of map data amount that surpasses the processing amount, a point c at which early distribution is needed is determined, and the point c is recorded in the map information acquisition unit 108 and the map information distribution unit 106.

After the point c is recorded, when the load factor of the high-precision map providing device 102 is low, a process of searching for a map data amount is continued.

When the vehicle approaches the point c, the map information acquisition unit 108 acquires map information including the section including the point c, and when the vehicle reaches the point c, the map information distribution unit 106 starts distribution of map information on the section, together with distribution of normal map information.

It is assumed that actual vehicle traveling cases include a case where the vehicle departs from a planned traveling route, on which the vehicle is expected to travel, toward a branch route, and a case where the vehicle is on a road running parallel with another road below or above and the current location (host vehicle position) is misunderstood.

When measurement of surroundings map data amounts on the planned traveling route has been completed in far advance (e.g., measurement of surroundings map data amounts in 10 sections has been completed), measurement of map data amounts for the case of departing from the planned traveling route or the case of misunderstanding of the host vehicle position may be carried out. For example, in a case where the vehicle travels on a branch route departing from the planned traveling route, measurement of a map data amount of map information including the branch route may be carried out. In a case where the vehicle travels on a road running parallel with another road below or above or a nearby road in close proximity, which road is located within a given range from the current location and could cause misunderstanding of the host vehicle position, measurement of a map data amount of map information including a planned traveling route based on a nearby road in a case where the vehicle travels on the nearby road that raises a possibility of misunderstanding of the host vehicle position may be carried out. In both cases, the map data amount of the map information may be acquired by the map information acquisition unit 108.

These processes will be described in detail later in description of a flowchart.

A map data distribution method of the high-precision map providing device 102 according to this embodiment will then be described.

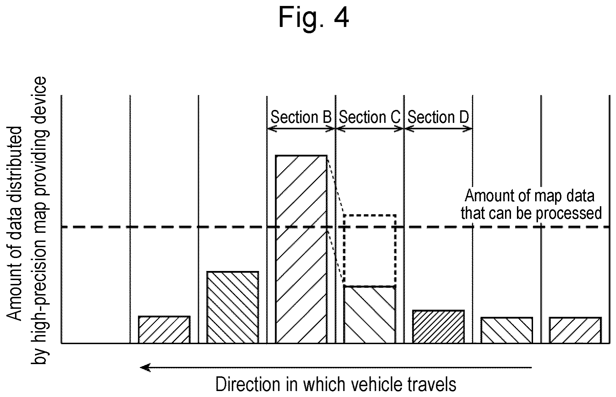

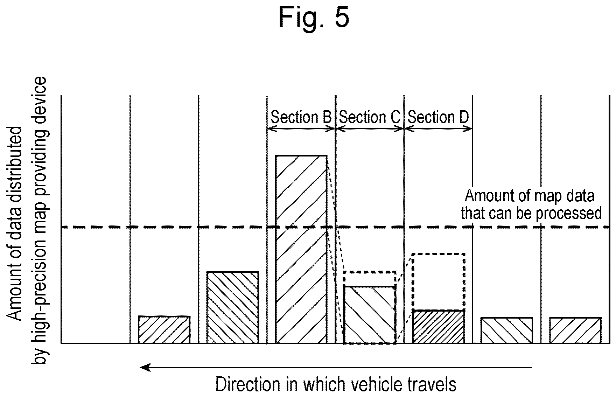

FIGS. 4 and 5 are explanatory diagrams of a method for remedying delay or omission of distribution of map information on the surroundings of the host vehicle that occurs in the situation indicated in FIG. 3.

In FIG. 4, when it is assumed that a dotted line in FIG. 4 represents the upper limit of an amount of map data that the high-precision map providing device 102 can process in a unit section, the maximum value of a map data amount of map information in the section B exceeds the upper limit, and therefore delay or omission of distribution of map information on the surroundings of the host vehicle is expected to occur in the section B, in which case early distribution in the section C is needed. In the case of FIG. 4, if a portion of map data amount that surpasses the upper limit in the section B is simply stacked on a map data amount in the section C, the map data amount in the section C overflows (exceeds the upper limit). To avoid this, as shown in FIG. 5, the whole or a portion of the original data in the section C (e.g., a portion that surpasses the upper limit or the whole original data in the case of FIG. 5) is distributed in the previous section D. By doing this, data must be distributed such that the map data amount in each section does not exceed the upper limit. In this case, a start point of early distribution is a starting point of the section D (which is two sections before the section B where occurrence of delay or omission of distribution is expected in the first place).

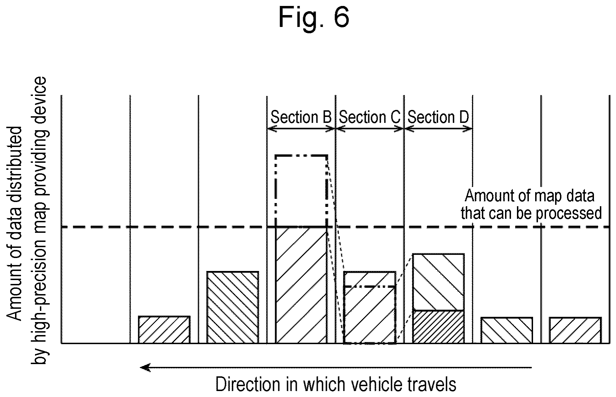

FIG. 6 depicts a distribution data amount of map information in each section in a case where early distribution according to this embodiment is carried out. This is an example in which the map data shown in FIG. 4 is distributed such that the portion of map data amount that surpasses the upper limit in the section B is distributed in the section C preceding the section B, and the whole original map data in the section C is distributed in the section D preceding the section C, by being stacked on the map data in the section D.

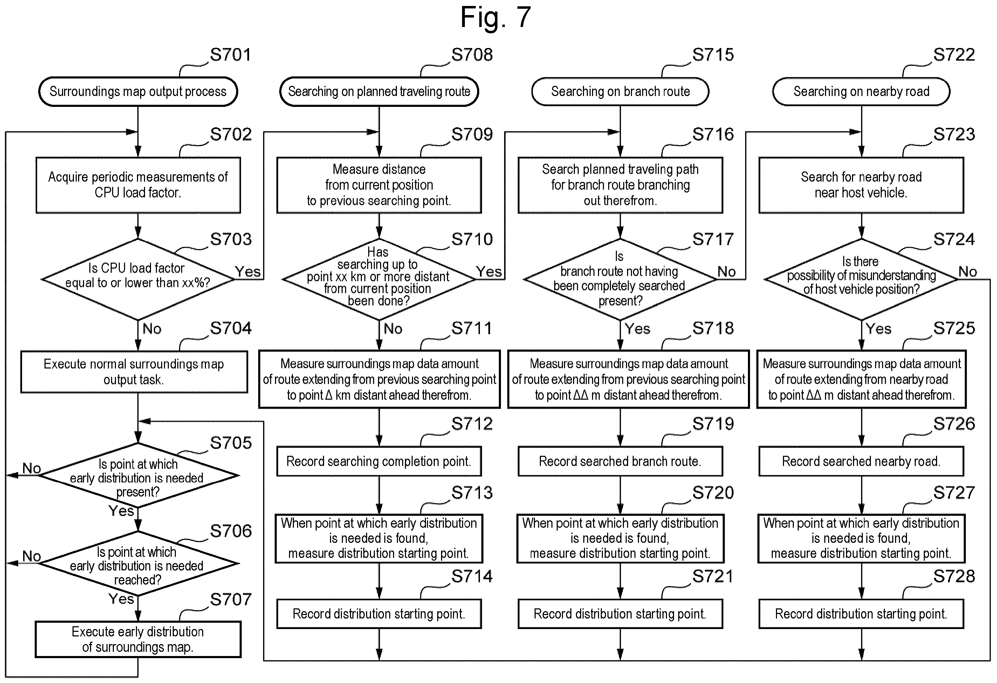

FIG. 7 is a flowchart of processes of map data amount measurement and map information distribution according to this embodiment.

The flow of processes is summarized as follows. When the load factor is low during a surroundings map output process, measurement of map data amounts on the guide route (planned traveling route) is proceeded with, and when the measurement up to a point located ahead to some extent is completed, measurement of map data amounts on the branch route is carried out, and then when this measurement up to a point located ahead to some extent is also completed and a nearby road, such as a road running parallel with another road below or above, which nearby road could cause misunderstanding of the host vehicle position, is found, measurement of map data amounts on a route ahead of the nearby road is carried out. If a section where failure of distribution is likely to occur is found during each searching process, a time required for a distribution process is measured according to a map data amount, a process starting point is determined, and then the process flow returns to a surroundings map distribution loop.

It should be noted that in this flowchart, the load factor is expressed as the CPU load factor for convenience in description. However, a state of the load factor being low may be determined based on other facts, such as the vehicle traveling on a road with fewer lanes or low memory usage.

In FIG. 7, first, periodical measurements of the CPU load factor are acquired (S702) during the surroundings map output process (S701), and when the CPU load factor is low (S703: Yes), the process flow proceeds to searching on the planned traveling route (S708). When the CPU load factor is high (S703: No), a normal surroundings map output task is executed (cyclically or in a distribution cycle) (S704).

In searching on the planned traveling route (S708), the distance from the current position to the previous map data amount searching point is measured (S709). When the previous map data amount searching is searching having been made up to a point sufficiently ahead of the current position (S710: Yes), the process flow proceeds to searching on the branch route (S715). Otherwise (S710: No), searching of a route extending forward from the previous searching completion position is carried out (S711). This searching is carried out in a range that does not affect surroundings map distribution at the current location, such as a searching amount covering two to three sections. When searching in several sections is completed, a searching completion point is recorded (S712). When a section where failure or omission of distribution of map data is expected to occur is found in the searching range, a distribution starting point at which early distribution is needed is measured (S713), and the distribution starting point is recorded (in the map information acquisition unit 108 and the map information distribution unit 106) (S714), and then the process flow returns to the loop of the surroundings map output process (S701).

In searching on the branch route (S715), the planned traveling route is searched to determine whether it has a branch route (S716), and whether a branch route not having been completely searched is present is determined (S717). When a branch route not having been completely searched is present (S717: Yes), searching of several sections is made from a point having been searched previously (S718). After this, a process similarly to searching on the planned traveling route (S708) follows, that is, a searching completion point is recorded (S719), and when a section where failure or omission of distribution of map data is expected to occur is found in a searching range, a distribution starting point at which early distribution is needed is measured (S720), the distribution starting point is recorded (S721), and then the process flow returns to the loop of the surroundings map output process (S701).

When searching on the planned traveling route (S708) and searching on the branch route (S715) are completed and the load factor is low (S717: Yes), searching on a nearby road (S722) is carried out. Searching is made to determine whether a nearby road, such as a road running parallel with another road below or above or a nearby road in close proximity, is present (S723), and when there is a possibility that the current location of the host vehicle, i.e., the host vehicle position is misunderstood because of the presence of the road running parallel with another road below or above or the nearby road (S724: Yes), several sections ahead of the nearby road are searched (S725), and a search completion point is recorded (S726). When a section where failure or omission of distribution of map data is expected to occur is found in a searching range, a distribution starting point at which early distribution is needed is measured (S727), the distribution starting point is recorded (S728), and then the process flow returns to the loop of the surroundings map output process (S701).

In the loop of the surrounding maps output process (S701) to which the process flow returns, whether a point at which early distribution is needed is present is determined (S705). When the point at which early distribution is needed is present (S705: Yes) and the point at which early distribution is needed is reached (S706: Yes), early distribution is started (S707).

As described above, the high-precision map providing device (map distribution device) 102 of the present embodiment includes: the position acquisition unit 104 that acquires the current position of a vehicle; the map information acquisition unit 108 that acquires map information on a planned traveling route of the vehicle; and the map information distribution unit 106 that distributes the map information to a different device (the autonomous driving control device 101) at timing corresponding to a map data amount of the map information. The map information acquisition unit 108 acquires the map data in the planned traveling route while the vehicle is traveling in a low-load section where a processing load is lower than processing loads in other sections.

The map information acquisition unit 108 acquires map data of the map information including a branch route branching out from the planned traveling route.

The map information acquisition unit 108 acquires map data of the map information including a planned traveling route based on a nearby road located in a given range from the current position.

When the maximum value of the map data amount exceeds a given value, the map information distribution unit 106 distributes the map information from a section preceding a given section.

In other words, the high-precision map providing device (map distribution device) 102 of this embodiment searches map information on the surroundings of the host vehicle based on a planned traveling route (measures a map data amount) while the vehicle travels in a section where a load is low, and when the map data amount of the map information is large and a section where delay or omission of distribution is expected to occur in a normal cycle is present, starts distribution of the map information at timing earlier than usual timing according to the map data amount. It is assumed that actual vehicle traveling includes a case of the vehicle departing from a planned traveling route and a case of misunderstanding of the host vehicle position due to the presence of a road running parallel with another road below or above. To deal with such problems, when the load factor offers an extra margin, the worst value of the map data amount in a case where the vehicle departs from the planned traveling route at a branch point or a map data amount of a route accompanying a road running parallel with another road below or above at the current position is measured as well.

According to this embodiment, in distribution of map information on the surroundings of the host vehicle from the map distribution device to the autonomous driving control device, delay or omission of distribution of surroundings map information can be prevented even when the vehicle travels in a section where a map data amount of the map information is large and delay or omission of distribution of the surroundings map information occurs in a normal distribution cycle.

The present invention is not limited to the above embodiment but includes various modifications. For example, the above embodiment has been described in detail to give an understandable description of the present invention, and is not necessarily limited to an embodiment including all constituent elements described above.

Some or all of the above-described constituent elements, functions, processing units, processing means, and the like may be provided in the form of hardware by, for example, packaging them into an integrated circuit. Each of the above-described constituent elements, functions, and the like may be provided in the form of software by a processor that interprets and executes a program for implementing each function. Information, such as a program, a table, and a file, for implementing each function can be stored in a storage device, such as a memory, a hard disk, and a solid state drive (SSD), or in a recording medium, such as an IC card, an SD card, and a DVD.

Control lines and information lines considered to be necessary for the description are indicated, and control lines and information lines the product needs are not necessarily indicated entirely. It is safe to consider that actually, almost all constituent elements are interconnected.

### Reference Signs List

- 100: autonomous driving system
- 101: autonomous driving control device
- 102: high-precision map providing device (map distribution device)
- 103: route information acquisition unit
- 104: position acquisition unit
- 105: map data
- 106: map information distribution unit
- 107: map information generation unit
- 108: map information acquisition unit
- 109: map data amount measurement unit

## Claims

1. A map distribution device comprising:
a position acquisition unit that acquires a current position of a vehicle;
a map information acquisition unit that acquires map information on a planned traveling route of the vehicle; and
a map information distribution unit that distributes the map information to a different device at timing corresponding to a map data amount of the map information, wherein
the map information acquisition unit calculates the map data amount in the planned traveling route while the vehicle is traveling in a low-load section where a processing load is lower than processing loads in other sections.

2. The map distribution device according to claim 1, wherein
the map information acquisition unit acquires a map data amount of the map information including a branch route branching out from the planned traveling route.

3. The map distribution device according to claim 1, wherein
the map information acquisition unit acquires a map data amount of the map information including a planned traveling route based on a nearby road located in a given range from the current position.

4. The map distribution device according to claim 1, wherein
when a maximum value of the map data amount exceeds a given value, the map information distribution unit distributes the map information from a section preceding a given section.
